# EUROPÄISCHE PATENTANMELDUNG

(11) **EP 3 112 006 A1**
(43) Veröffentlichungstag der Anmeldung: **04.01.2017**
(21) Anmeldenummer: 15201593.9
(22) Anmeldetag: 21.12.2015
(51) Int. Cl.: B01D 29/64

(54) **SCHNECKENFILTER**

(30) Priorität: 24.06.2015 DE 202015103312 U
(71) Anmelder: Betebe GmbH, 48691 Vreden (DE)
(72) Erfinder: Bengfort, Antonius, 48691 Vreden (DE)
(74) Vertreter: Habbel, Ludwig

(57) **Zusammenfassung**

Bei einem Schneckenfilter, mit einer Schneckenwelle, die wenigstens einen wendelförmig verlaufenden Schneckensteg und wenigstens einen, von dem Schneckensteg begrenzten und als Vertiefung im äußeren Umfang der Schneckenwelle ausgestalteten Schneckengang aufweist, und mit einer Filterhülse, welche die Schneckenwelle koaxial umgibt und eine in radialer Richtung durchlässige Filterfläche aufweist, schlägt die Erfindung vor, dass der Schneckensteg eine Nut aufweist und in der Nut eine Abstreiflippe angeordnet ist, die sich radial nach außen über den Schneckensteg hinaus bis zu der Filterhülse erstreckt, und dass die Schneckenwelle Schrägflächen aufweist, die radial von innen nach außen verlaufen und denen die Abstreiflippe anliegt, derart, dass eine Axialkraft, welche im Betrieb des Schneckenfilters auf die Abstreiflippe einwirkt, die Abstreiflippe entlang der Schrägflächen auch radial nach außen führt.

## Beschreibung

Die Erfindung betrifft einen Schneckenfilter nach dem Oberbegriff des Anspruchs 1.

Aus der DE 10 2012 022 189 B3 ist ein gattungsgemäßer Schneckenfilter bekannt. Als Schneckenfilter wird in diesem Zusammenhang eine Filtrationseinrichtung bezeichnet, bei der die Filtration mittels einer rohrförmigen Filterfläche erfolgt, nämlich mittels einer Filterhülse, die eine Schneckenwelle eng umgibt. Durch die als Schneckengang bezeichnete Vertiefung, die wendelförmig um die Schneckenwelle umläuft, kann fließfähiges Material nachgefördert werden, insbesondere wenn die Schneckenwelle drehbar um ihre Längsachse angetrieben ist und somit als Fördereinrichtung für das zu filtrierende Material dient. Flüssige Anteile bzw. Anteile, deren Partikel ausreichend klein sind, um die Filterhülse passieren zu können, treten aus dem Schneckengang durch die Filterhülse radial nach außen, während größere Partikel im Inneren der Filterhülse zurückgehalten werden. Damit sich die Filterhülse mit diesen größeren Partikeln nicht zusetzt und der gesamte Schneckenfilter auf diese Weise verstopft, ist an der Schneckenwelle eine Abstreiflippe vorgesehen, die die Innenseite der Filterhülse reinigt. Die abgestreiften Partikel werden ebenfalls durch den Schneckengang in axialer Richtung der Schneckenwelle gefördert, so dass sie beispielsweise an einem axialen Ende der Filterhülse aus dem Schneckenfilter austreten können.

Der mechanische Reinigungsvorgang, die Innenseite der Filterhülse mittels der Abstreiflippe abzureinigen, führt zu einem mechanischen Verschleiß, so dass eine regelmäßige Wartung des Schneckenfilters erforderlich ist.

Der Erfindung liegt die Aufgabe zugrunde, einen gattungsgemäßen Schneckenfilter dahingehend zu verbessern, dass dieser möglichst lange Wartungsintervalle ermöglicht und darüber hinaus eine möglichst wirtschaftlich durchzuführende Wartung ermöglicht, so dass insgesamt der Schneckenfilter besonders wirtschaftlich betrieben werden kann.

Diese Aufgabe wird durch einen Schneckenfilter mit den Merkmalen des Anspruchs 1 gelöst. Vorteilhafte Ausgestaltungen sind in den Unteransprüchen beschrieben.

Die Erfindung schlägt mit anderen Worten vor, als Abstreiflippe nicht den radial äußersten Kantenbereich des Schneckenstegs zu nutzen. Dies ermöglicht zwar eine Wartung innerhalb kurzer Zeit, also mit kurzen Ausfallzeiten des Schneckenfilters, jedoch ist dabei die komplette Schneckenwelle bei Verschleiß zu ersetzen, so dass die Wartung zwar in kurzer Zeit, aber mit einem hohen Kostenaufwand durchgeführt wird. Vorschlagsgemäß ist die Abstreiflippe als separates Bauteil ausgestaltet, so dass unabhängig von der Schneckenwelle lediglich dieses separate Bauteil ausgetauscht werden muss, wenn die bislang benutzte Abstreiflippe ihre Verschleißgrenze erreicht hat.

Eine besonders schnelle Durchführung dieser Wartung wird dadurch ermöglicht, dass die Abstreiflippe nicht etwa mit dem Schneckensteg verklebt oder auf andere Weise fest verbunden ist, sondern vielmehr in den Schneckensteg eingesteckt ist. Hierzu ist im Schneckensteg eine Nut vorgesehen, in welche die Abstreiflippe eingesteckt ist. Die Abstreiflippe taucht dabei nicht vollständig in die Nut ein, sondern ragt radial nach außen über den Schneckensteg hinaus bis zur Filterhülse, so dass diese auswechselbare Abstreiflippe als Reinigungsorgan im Betrieb des Schneckenfilters wirksam wird und der Innenfläche der Filterhülse anliegt, um diese mechanisch abzureinigen. Im Vergleich beispielsweise zu einer Verklebung der Abstreiflippe ist ausgeschlossen, dass bei einer Entfernung der Abstreiflippe Klebstoffreste oder Teile der alten Abstreiflippe an der Schneckenwelle, insbesondere am Schneckengang, verbleiben können, so dass eine entsprechend zeitaufwendige und mühsame Entfernung derartiger Reste nicht erforderlich wird.

Nachdem eine verschlissene Abstreiflippe aus der Nut eines Schneckenstegs herausgezogen worden ist, kann eine neue Abstreiflippe in die Nut eingesetzt werden und gegebenenfalls dabei der erwähnte Formschluss wieder hergestellt werden. Anschließend wird die gewartete und wieder instand gesetzte Schneckenwelle in den Schneckenfilter wieder eingesetzt, so dass mit einer sehr kurzen Stillstandszeit der Schneckenfilter wieder in Betrieb genommen werden kann. Diese Wartung kann in so kurzer Zeit durchgeführt werden, dass es beispielsweise nicht erforderlich ist, eine zweite Schneckenwelle in Reserve zu halten, um eine kurze Wartungsunterbrechung dadurch zu ermöglichen, dass eine vorbereitete Ersatz-Schneckenwelle gegen die verschlissene Schneckenwelle ausgetauscht wird. Aufgrund der in kurzer Zeit durchzuführenden Wartungsarbeiten kann auf einen solchen wirtschaftlichen Aufwand verzichtet werden.

Vorschlagsgemäß ist weiterhin vorgesehen, dass die Schneckenwelle Schrägflächen aufweist und die Abstreiflippe mit diesen Schrägflächen zusammenwirkt. Die Schrägflächen verlaufen sowohl radial von innen nach außen als auch dabei schräg ansteigend in axialer Richtung, bezogen auf die Längsachse der Schneckenwelle. Da die Abstreiflippe diesen Schrägflächen anliegt, wird bei Einwirkung von Kräften, die eine axiale Verlagerung der Abstreiflippe an der Schneckenwelle zu bewirken bestrebt sind, aufgrund der Schrägflächen automatisch auch eine Bewegung der Abstreiflippe radial nach außen bewirkt. Die Schrägflächen können an jeder der die Nut begrenzenden Flächen der Schneckenwelle bzw. des Schneckenstegs vorgesehen sein.

In einer Ausgestaltung kann beispielsweise vorgesehen sein, dass die Abstreiflippe Vorsprüngen anliegt, welche an den Innenseiten der Nutflanken sowohl axial in Längsrichtung der Schnecke als auch radial, also insgesamt schräg verlaufen, und welche die Abstreiflippe in der Nut klemmend halten, so dass die Abstreiflippe aufgrund der einwirkenden Kräfte nicht unkontrolliert ausschließlich in axialer Richtung bewegt werden kann. Vielmehr wird die Abstreiflippe bei Überwindung der Klemmbzw. Anpresskräfte durch die schräg verlaufenden Vorsprünge sowohl axial als auch radial nach außen geführt.

In einer anderen, als vorteilhaft angesehenen Ausgestaltung kann vorgesehen sein, dass die Abstreiflippe formschlüssig in der Nut gehalten ist. Unabhängig von temperatur- oder fertigungsbedingten Maßabweichungen, die einen Klemmsitz erheblich beeinflussen können, kann so das gewünschte Verhalten der Abstreiflippe sichergestellt werden. Beispielsweise können zusammenwirkende Vorsprünge und / oder Vertiefungen an der Abstreiflippe sowie in der Nut, z. B. an den Innenseiten der Nutflanken, sowohl axial in Längsrichtung der Schnecke als auch radial, also insgesamt schräg verlaufen und zusammen mit einer axialen Bewegung der Abstreiflippe gleichzeitig auch deren radiale Bewegung verursachen.

Durch diese Schrägflächen werden mehrere Vorteile erreicht:
- Erstens wird die weitere Axialverschiebung der Abstreiflippe zuverlässig verhindert, weil die Abstreiflippe durch die gleichzeitige Bewegung nach außen in Kontakt mit der Filterhülse gerät und dadurch an einer weiteren Bewegung sowohl in radialer als auch in axialer Richtung gegenüber der Schneckenwelle gehindert wird.
- Zweitens wird dadurch auch eine automatische Nachführung im Sinne einer selbstnachstellen Abstreiflippe zu Gunsten optimaler Reinigungsergebnisse bewirkt: wenn sich bei einem entsprechendem Verschleiß der Abstreifkante die Abmessungen der Abstreiflippe in radialer Richtung verringern, kann die Abstreiflippe aufgrund der ständig wirkenden Kräfte, welche die Abstreiflippe axial zu verlagern bestrebt sind, in axialer Richtung an der Schneckenwelle entlang rutschen. Dabei gerät sie automatisch auch radial nach außen, so dass sie stets nachgeführt wird und ihre radial äußere, so genannte Abstreifkante immer reinigungswirksam der Filterhülse anliegt.
- Drittens können durch diesen Effekt der selbstnachstellenden Abstreiflippe die Wartungsintervalle des Schneckenfilters besonders groß gewählt werden, weil die Nutzungsdauer der Abstreiflippe erheblich verlängert wird.
- Viertens kann eine optimale Funktionsweise der Abstreiflippe hinsichtlich ihres Reinigungs- bzw. Abstreifverhaltens ermöglicht werden. Der radiale Überstand, mit welchem die Abstreiflippe über den Schneckensteg hinausragt, kann nämlich minimal bemessen sein, so dass die Abstreiflippe durch den Schneckensteg optimal geführt werden und gegen ein Umklappen bzw. Umknicken gesichert werden kann. Ein im Betrieb unvermeidlich auftretender Verschleiß der Abstreiflippe wird nämlich durch die selbstnachstellende Ausgestaltung automatisch kompensiert. Es ist also nicht erforderlich, einen vergleichsweise großen radialen Überstand der Abstreiflippe zu wählen, mit welchem die Abstreiflippe in einem gebogenen Verlauf der Filterhülse anliegt, um durch diesen gebogenen Verlauf einen Materialüberschuss bzw. eine besonders große radiale Länge der Abstreiflippe bereitzustellen, um auf diese Weise angesichts des unvermeidlichen Verschleißes eine möglichst lange Nutzungsdauer der Abstreiflippe zu ermöglichen. Die bei einer derartig ausgestalteten Abstreiflippe stattfindende Verkürzung ihres radialen Überstandes bei fortschreitendem Verschleiß bewirkt ein unterschiedlich steifes Verhalten dieses Überstandes und damit einhergehend auch ein unterschiedliches Reinigungs- bzw. Abstreifverhalten. Die vorschlagsgemäße Ausgestaltung und der damit einhergehend ermöglichte möglichst geringe radiale Überstand der Abstreiflippe vom Ende des Schneckenstegs bis zur Abstreifkante ermöglicht hingegen gleichbleibende Reinigungs- bzw. Abstreifeigenschaften, so dass die konstruktive Auslegung des Schneckenfilters in dieser Hinsicht optimiert werden kann.

Vorteilhaft kann vorgesehen sein, dass die Nut im Nutgrund eine Profilierung in radialer Richtung aufweist und die Abstreiflippe formschlüssig mit dieser Profilierung zusammenwirkt. Dies ermöglicht im Vergleich dazu, die Nutflanken bzw. die beiden Oberflächen der Abstreiflippe zu profilieren, eine einfachere und wirtschaftlichere Herstellung der Schnecke und der Abstreiflippe. Die Abstreiflippe weist also eine radial äußere Kante auf, die als Abstreifkante reinigungswirksam der Filterhülse anliegt, und eine radial innere Kante, die sich zum Nutgrund des Schneckenstegs erstreckt und dort den Formschluss mit dem entsprechend profilierten Nutgrund bewirkt. Dadurch, dass sich diese den Formschluss bewirkende Profilierung in radialer Richtung und nicht etwa in tangentialer Richtung erstreckt, wird eine vorteilhafte Ausgestaltung der Abstreiflippe ermöglicht, indem diese preisgünstig aus einem Flachmaterial hergestellt werden kann. Einfach durch den Zuschnitt der Abstreiflippe aus diesem Flachmaterial kann nämlich die entsprechende, den Formschluss bewirkende Kontur hergestellt werden. Eine seitliche Oberflächenbearbeitung der Abstreiflippe, die, an der Schneckenwelle montiert, in tangentialer Richtung eine Profilierung bewirken würde und nur mit einem vergleichsweise größeren Aufwand herstellbar ist, kann auf diese Weise erübrigt werden. Der Formschluss wird vielmehr automatisch dadurch hergestellt, dass die Abstreiflippe in die Nut des Schneckengangs eingedrückt wird. In umgekehrter Bewegungsrichtung wird auch die Demontage der Abstreiflippe erleichtert, weil diese einfach in radialer Richtung aus der Nut herausgezogen werden kann. Insbesondere kann vorteilhaft vorgesehen sein, dass die den Formschluss bewirkende Profilierung gleichzeitig auch die bereits erwähnten Schrägflächen bildet, so dass sowohl die Schneckenwelle als auch die Abstreiflippe möglichst einfach und preisgünstig hergestellt werden können.

Abweichend von diesem als vorteilhaft beschriebenen Beispiel kann ein Formschluss auch dadurch hergestellt werden, dass die Abstreiflippe eine Vielzahl von Ausnehmungen aufweist und mit entsprechenden Vorsprüngen die in der Schneckenwelle vorgesehen sind, regelrecht verrastet bzw. verklipst wird. Die als vorteilhaft beschriebene Ausgestaltung jedoch ermöglicht es, in Bezug auf die Montagerichtung der Abstreiflippe einen hinterschneidungsfreien Formschluss zu bewirken, so dass die Demontage und anschließende Montage von Abstreiflippen während der Wartung der Schneckenwelle besonders schnell und unkompliziert durchgeführt werden kann. Der Formschluss sichert die Abstreiflippe vielmehr in axialer Richtung, um eine in axialer Richtung ansonsten auftretende Relativbewegung zwischen der Abstreiflippe und der Schneckenwelle zu verhindern. In radialer Richtung hingegen kann durch die entsprechende Profilierung im Nutgrund des Schneckengangs eine problemlose und hinterschneidungsfreie Montage der Abstreiflippe ermöglicht werden.

Vorteilhaft kann die Abstreiflippe über ihre gesamte Länge verteilt eine Vielzahl von Vorsprüngen oder Vertiefungen aufweisen, die zusammen mit einer entsprechend komplementären Profilierung des Schneckenstegs den Formschluss bewirken. Durch diese Verteilung über die Länge der Abstreiflippe werden auftretende Kräfte entsprechend gleichmäßig über die gesamte Länge der Abstreiflippe verteilt, so dass unerwünschte Verformungen wie Ausbeulungen o. dgl. zuverlässig vermieden werden können und somit eine möglichst gleichmäßige Anlage der Abstreiflippe an der Innenfläche der Filterhülse während des Betriebs des Schneckenfilters gewährleistet werden kann.

Vorteilhaft kann eine optimale Abstreifwirkung dadurch ermöglicht werden, dass die Abstreiflippe zwar aus einem flexiblen Material besteht, welches sich optimal in die innere Oberfläche der Filterhülse anlegt, aber dabei gegen ein unerwünschtes Umklappen gehindert ist, indem in Drehrichtung hinter der Abstreiflippe eine Stützschulter vorgesehen ist, die ein entsprechendes Umklappen der Abstreiflippe verhindert. Hierdurch kann der radiale Überstand, mit welchem sich die Abstreiflippe über den Schneckensteg und insbesondere über die Stützschulter hinaus erstreckt, besonders gering gehalten werden. In Drehrichtung vor der Abstreiflippe hingegen ist die Abstreiflippe in radialer Richtung nach innen freier, so dass sich das dort angesammelte, von der Filterhülse abgestreifte Material sammeln kann und problemlos weiter nach innen in den Schneckengang einströmen kann.

Die Stützschulter kann als ein separates Bauteil am Schneckensteg vorgesehen sein, so dass der Schneckensteg auf diese Weise mehrteilig ausgestaltet ist. In vorteilhafter Ausgestaltung jedoch kann der Schneckensteg selbst die erwähnte Stützschulter bilden, so dass kein separates Bauteil erforderlich wird. Die beiden Nut begrenzenden Ränder des Schneckenstegs sind zu diesem Zweck einfach in radialer Richtung unterschiedlich weit ausgebildet, so dass der in Drehrichtung hintere Nutrand die gewünschte Stützschulter bildet.

Vorteilhaft kann die Abstreiflippe aus einem Elastomerwerkstoff bestehen, beispielsweise aus einem Polyurethan- oder Silikonmaterial. Hierdurch wird die gewünschte Verformbarkeit der Abstreiflippe, um sich der Filterhülse optimal anlegen zu können, ebenso ermöglicht wie eine gewisse Formbeständigkeit, die für gute Reinigungsergebnisse gewünscht ist, um ein zuverlässiges Abstreifen der zurückgehaltenen Partikel zu ermöglichen. Vorteilhaft kann die Abstreiflippe in ihrem demontierten Zustand als flacher Materialzuschnitt vorliegen, also als ein Bauteil, welches aus einem flachen, größeren Materialabschnitt ausgeschnitten ist. Hierdurch wird eine wirtschaftliche Fertigung der Abstreiflippe begünstigt, wie bereits erläutert. Dies gilt insbesondere, wenn bereits das verwendete Material wirtschaftlich erhältlich ist, beispielsweise indem es an seinen beiden gegenüberliegenden Oberflächen nicht profiliert, sondern glatt ausgestaltet ist.

Dabei kann vorteilhaft ein solcher flacher Materialzuschnitt im demontierten Zustand als gebogener Materialzuschnitt vorliegen. Die Biegung, also der entsprechende Kurvenradius dieses Materialzuschnitts richtet sich nach dem Durchmesser der Schneckenwelle, beispielsweise des Nutgrundes in dem Schneckensteg, und nach der Steigung, die der Schneckensteg auf der Schneckenwelle beschreibt. Einerseits wird durch den gebogenen Verlauf des flachen Materialzuschnitts ein optimal spannungsarmer Sitz der Abstreiflippe in der Nut des Schneckenstegs ermöglicht, so dass beispielsweise Rückstellkräfte minimiert sind, die ansonsten bestrebt wären, eine geradlinig verlaufende Abstreiflippe aus der Nut des Schneckengangs wieder zu lösen. Andererseits bewirkt die Verformung des flachen Materialzuschnitts, wenn dieser in die wendelförmig verlaufenden Nut der Schnecke eingeführt wird, eine geringe Spannung, mit welcher die Abstreiflippe den Nuträndern anliegt, um einen ausreichend sicheren Halt zu bieten und es zu ermöglichen, dass die so mit der Abstreiflippe bestückte Schnecke gehandhabt und in die Filterhülse eingesetzt werden kann, ohne dass die Abstreiflippe sich dabei aus der Schnecke löst.

Vorteilhaft kann bei einem solch gebogenen Verlauf des Materialzuschnitts auf dessen radial innerer Seite die Profilgestaltung vorgesehen sein, die zur Herstellung des Formschlusses mit der Schneckenwelle dient, während auf der radial äußeren Seite dieses Materialzuschnitts die Abstreiflippe glatt verläuft, entsprechend dem gewünschten Kurvenverlauf des Materialzuschnitts.

Vorteilhaft kann die Abstreiflippe zur Herstellung des Formschlusses mit der Schneckenwelle eine Trapezoidverzahnung aufweisen. Auf diese Weise wird in vergleichsweise kurzen Abständen, und damit gleichmäßig über die Länge der Abstreiflippe verteilt, eine Vielzahl von Schrägflächen gebildet, um den bereits erläuterten selbst nachstellenden Effekt bei der Anlage der Abstreiflippe an der Filterhülse zu ermöglichen und um durch diese gleichmäßige Verteilung des Formschlusses auf viele einzelne Stellen eine möglichst gleichmäßige Belastung der Abstreiflippe sicherzustellen, die eine gleichmäßige Anlage der Abstreiflippe an der Filterhülse bewirkt.

Ein Ausführungsbeispiel der Erfindung wird anhand der rein schematischen Darstellungen nachfolgend näher erläutert. Dabei zeigt
- Fig. 1: eine perspektivische Ansicht auf eine Schneckenwelle,
- Fig. 2: einen Querschnitt durch die Schneckenwelle, und
- Fig. 3: eine Ansicht auf eine Abstreiflippe in demontiertem und unverformten Zustand.

In den Zeichnungen ist mit 1 eine Schneckenwelle bezeichnet, die mehrere Schneckenstege 2 und dazwischen verlaufende Schneckengänge 3 aufweist. An ihrem einen Ende weist die Schneckenwelle 1 eine Antriebsgeometrie 4 auf, die eine zentrale Zentriermulde 5 umfasst, so dass dieses Ende der Schneckenwelle 1 als deren Antriebsende 6 bezeichnet wird.

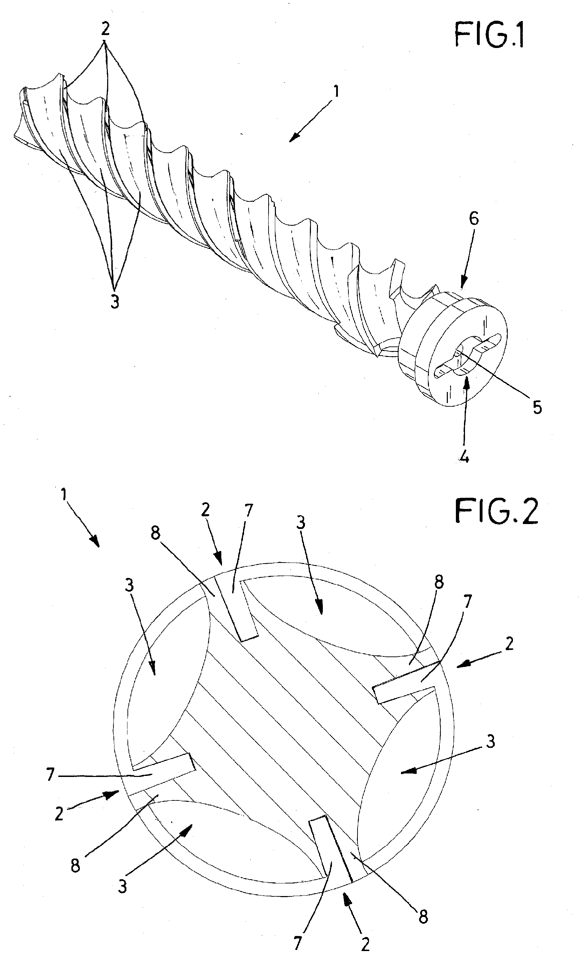

Wie insbesondere aus Fig. 2 ersichtlich ist, ist jeder Schneckensteg 2 an seinem radial äußeren Ende mit einer Nut 7 versehen. Entsprechend der Ansicht von Fig. 2 ist die Drehrichtung der Schneckenwelle 1 im Betrieb im Uhrzeigersinn vorgesehen, so dass in Drehrichtung hinter der Nut 7 jeder Schneckensteg 2 eine Stützschulter 8 bildet, die sich radial weiter nach außen erstreckt als der in Drehrichtung vordere Nutrand, den der Schneckensteg 2 in Drehrichtung vor der Nut 7 bildet.

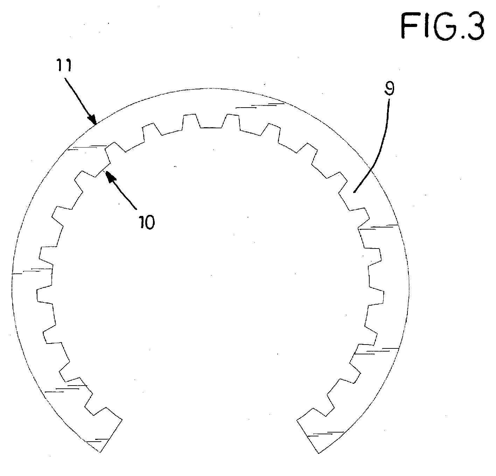

In die Nut 7 wird eine Abstreiflippe 9 eingesetzt, die aus Fig. 3 in ihrem unverformten, nicht montierten Zustand zu ersehen ist. Die Abstreiflippe 9 besteht aus einem flachen Materialzuschnitt, sie wird nämlich aus einer Polyurethanmatte ausgeschnitten, beispielsweise durch Laserschneiden, Wasserstrahlschneiden, Stanzen o. dgl. Sie liegt im unverformten Zustand als kreisbogenförmig gekrümmter Materialzuschnitt vor, wobei der Krümmungsradius der Abstreiflippe 9 an die Geometrie der Schneckenwelle 1 angepasst ist, insbesondere an den Durchmesser der Schneckenwelle 1 im Bereich des Nutgrundes einer Nut 7 und in Anpassung an die Steigung, welche die Schneckenstege 2 aufweisen.

Die Abstreiflippe 9 wird an der Schneckenwelle 1 montiert, indem sie mit ihrer radial inneren Kante 10 in die Nut 7 eingesetzt wird, so dass ihre radial äußere Kante 11 abstreifwirksam der inneren Oberfläche einer Filterhülse anliegen kann, welche die Schneckenwelle 1 konzentrisch umgibt.

Auf ihrer radial inneren Seite, also entlang dem Verlauf der inneren Kante 10, ist die Abstreiflippe 9 in Art einer Trapezoidverzahnung profiliert, wobei eine damit komplementäre Zahngeometrie im Nutgrund der Nut 7 vorgesehen ist. Durch die trapezoide Ausgestaltung der einzelnen Zähne werden Schrägflächen geschaffen, an denen die Abstreiflippe 9 entlang zu gleiten bestrebt ist, wenn im Betrieb des Schneckenfilters, in dem die Schneckenwelle 1 verbaut ist, entsprechende Kräfte auftreten, die eine solche Verschiebung der Abstreiflippe 9 in axialer Richtung entlang der Schneckenwelle 1 zu bewirken bestrebt sind. Aufgrund dieser Schrägflächen der Trapezoidverzahnung wird eine derartige axiale Relativbewegung zwischen Schneckenwelle 1 und Abstreiflippe 9 zugelassen, allerdings mit einer Bewegungskomponente, welche die Abstreiflippe 9 radial nach außen führt und somit an die innere Oberfläche der Filterhülse anlegt.

Abweichend von dem dargestellten Ausführungsbeispiel kann ein zusätzlicher Formschluss zwischen der Abstreiflippe 9 und der Schneckenwelle 1 dadurch hergestellt werden, dass Bohrungen vorgesehen sind, die den aus Fig. 3 ersichtlichen Materialzuschnitt durchsetzen, und zwar quer zu der Flächenebene, aus welcher dieser Materialzuschnitt herausgeschnitten ist. Derartige Bohrungen dienen zur Aufnahme von Sicherungsstiften, Sicherungsschrauben o. dgl., die zunächst einen zuverlässigen Halt der Abstreiflippe 9 in der Schneckenwelle 1 bei Durchführung der Wartungsarbeiten sichern, bis die Schneckenwelle 1 samt der montierten Abstreiflippe 9 dann in die Filterhülse des Schneckenfilters eingesetzt worden ist. Ab diesem Zeitpunkt ist ein verliersicherer Sitz der Abstreiflippen 9 an der Schneckenwelle 1 ohnehin durch die äußere Filterhülse und durch den Formschluss zwischen den Abstreiflippen 9 und der Schneckenwelle 1 sichergestellt.

## Patentansprüche

1. Schneckenfilter,
mit einer Schneckenwelle (1),
die wenigstens einen wendelförmig verlaufenden Schneckensteg (2)
und wenigstens einen, von dem Schneckensteg (2) begrenzten und als Vertiefung im äußeren Umfang der Schneckenwelle (1) ausgestalteten Schneckengang (3) aufweist,
und mit einer Filterhülse, welche die Schneckenwelle (1) koaxial umgibt und eine in radialer Richtung durchlässige Filterfläche aufweist,
**dadurch gekennzeichnet,**
**dass** der Schneckensteg (2) eine Nut (7) aufweist und in der Nut (7) eine Abstreiflippe (9) angeordnet ist, die sich radial nach außen über den Schneckensteg (2) hinaus bis zu der Filterhülse erstreckt,
und **dass** die Schneckenwelle (1) Schrägflächen aufweist, die radial von innen nach außen verlaufen und denen die Abstreiflippe (9) anliegt,
derart, dass eine Axialkraft, welche im Betrieb des Schneckenfilters auf die Abstreiflippe (9) einwirkt, die Abstreiflippe (9) entlang der Schrägflächen auch radial nach außen führt.

2. Schneckenfilter nach Anspruch 1,
**dadurch gekennzeichnet,**
**dass** die Abstreiflippe (9) formschlüssig in der Nut (7) gehalten ist.

3. Schneckenfilter nach Anspruch 2,
**dadurch gekennzeichnet,**
**dass** die Nut (7) im Nutgrund eine Profilierung in radialer Richtung aufweist,
und **dass** die Abstreiflippe (9) formschlüssig dieser Profilierung anliegt.

4. Schneckenfilter nach Anspruch 1 oder 2,
**dadurch gekennzeichnet,**
**dass** die Abstreiflippe (9) über ihre Länge verteilt eine Vielzahl von Vorsprüngen und / oder Vertiefungen aufweist, die, den Formschluss mit der Schneckenwelle (1) bewirkend, mit eine entsprechenden Profilierung des Schneckenstegs (2) zusammenwirkt.

5. Schneckenfilter nach einem der vorhergehenden Ansprüche,
**dadurch gekennzeichnet,**
**dass** in Drehrichtung der Schneckenwelle (1) hinter der Abstreiflippe (9) eine Stützschulter (8) angeordnet ist, die sich radial weiter nach außen erstreckt als die Schneckenwelle (1) vor der Abstreiflippe (9).

6. Schneckenfilter nach Anspruch 5,
**dadurch gekennzeichnet,**
**dass** der Schneckensteg (2) sich in Drehrichtung der Schneckenwelle (1) hinter der Abstreiflippe (9) weiter radial nach außen erstreckt als vor der Abstreiflippe (9), derart, dass der Schneckensteg (2) die Stützschulter (8) bildet.

7. Schneckenfilter nach einem der vorhergehenden Ansprüche,
**dadurch gekennzeichnet,**
**dass** die Abstreiflippe (9) aus einem Elastomerwerkstoff besteht.

8. Schneckenfilter nach einem der vorhergehenden Ansprüche,
**dadurch gekennzeichnet,**
**dass** die Abstreiflippe (9) im demontierten Zustand als flacher Materialzuschnitt ausgestaltet ist, der gebogen verläuft.

9. Schneckenfilter nach Anspruch 8,
**dadurch gekennzeichnet,**
**dass** der Materialzuschnitt auf seiner radial inneren Seite die Profilgestaltung zur Herstellung des Formschlusses mit der Schneckenwelle (1) aufweist.

10. Schneckenfilter nach Anspruch 2 oder 3,
**dadurch gekennzeichnet,**
**dass** die Abstreiflippe (9) zur Herstellung des Formschlusses mit der Schneckenwelle (1) eine Trapezoidverzahnung aufweist.
